# EUROPEAN PATENT APPLICATION

(11) **EP 4 826 984 A1**
(43) Date of publication of application: **21.10.2026**
(21) Application number: 24919735.1
(22) Date of filing: 12.09.2024
(51) Int. Cl.: H02N 2/04

(54) **PIEZOELECTRIC DRIVING APPARATUS, ANTENNA AND BASE STATION**

(30) Priority: 22.01.2024 CN 202410086683
(71) Applicant: Huawei Technologies Co., Ltd., Shenzhen, Guangdong 518129 (CN)
(72) Inventor: LI, Liang, Shenzhen, Guangdong 518129 (CN); XIAO, Yadi, Shenzhen, Guangdong 518129 (CN); ZHOU, Zhihao, Shenzhen, Guangdong 518129 (CN); CHEN, Shi, Shenzhen, Guangdong 518129 (CN)
(74) Representative: Goddar, Heinz J.
(86) International application number: PCT/CN2024/118551
(87) International publication number: WO 2025/156655

(57) **Abstract**

This application provides a piezoelectric drive apparatus, an antenna, and a base station, and relates to the field of communication technologies. The piezoelectric drive apparatus provided in this application is used in a phase shifter. The piezoelectric drive apparatus includes an apparatus fastening holder, a resonant assembly, a forward preloading assembly, and a driven member, and the apparatus fastening holder is configured to connect to a frame. The resonant assembly is connected to the apparatus fastening holder, the resonant assembly includes a metal elastomer and a piezoelectric material layer, the piezoelectric material layer is disposed on at least one surface of the metal elastomer, and the metal elastomer includes a drive foot. The driven member is located on a side of the apparatus fastening holder that faces the frame, and the forward preloading assembly is configured to press the drive foot of the metal elastomer against the driven member under an elastic force. In this way, a high-frequency microscopic motion of the resonant assembly can be converted into macroscopic displacement of the driven member, so that the drive foot drives the driven member to move relative to the apparatus fastening holder. Because the piezoelectric drive apparatus directly outputs a driving force that meets a movement requirement, the piezoelectric drive apparatus occupies a small space, thereby meeting a miniaturized design requirement of the antenna.

## Description

### CROSS-REFERENCE TO RELATED APPLICATIONS

This application claims priority to Chinese Patent Application No. 202410086683.0, filed with the China National Intellectual Property Administration on January 22, 2024 and entitled "PIEZOELECTRIC DRIVE APPARATUS, ANTENNA, AND BASE STATION", which is incorporated herein by reference in its entirety.

### TECHNICAL FIELD

This application relates to the field of communication technologies, and in particular, to a piezoelectric drive apparatus, an antenna, and a base station.

### BACKGROUND

With development of mobile communication, usage of mobile terminals is increasingly high, and network coverage of mobile cellular networks is crucial to the mobile communication. Because a key device in the mobile cellular network is an antenna, to meet different network coverage requirements, the antenna usually adjusts signal coverage by using a remote electrical tilt system. Currently, to change coverage of the antenna and optimize a signal coverage area of the antenna, a signal radiation tilt angle of the antenna is usually changed. The signal radiation tilt angle of the antenna is usually adjusted by changing phase distribution of an antenna array through a phase shifter, to adjust a radiation pattern of the antenna, thereby achieving an objective of adjusting the signal coverage.

The phase shifter may drive, through a power mechanism, a dielectric medium of the phase shifter to move, to change relative positions of the dielectric medium and a strip line, thereby changing a dielectric constant on a signal transmission path in the phase shifter. In this way, when a signal of the antenna passes through the phase shifter, a specific phase delay or advance can be generated during transmission of the signal of the antenna, to implement directional adjustment of a radiation direction of the signal of the antenna. However, conventional power mechanisms used in phase shifters are large in size and weight, and cannot meet development requirements for miniaturization and lightweight of antennas.

### SUMMARY

This application provides a piezoelectric drive apparatus, an antenna, and a base station, to achieve a miniaturized and lightweight design of the antenna.

According to a first aspect, this application provides a piezoelectric drive apparatus. The piezoelectric drive apparatus may be used in a phase shifter. During specific arrangement of the piezoelectric drive apparatus, the piezoelectric drive apparatus includes an apparatus fastening holder, a resonant assembly, a forward preloading assembly, and a driven member. The apparatus fastening holder is configured to connect to a frame of a phase shifter, so that the apparatus fastening holder supports another structure in the piezoelectric drive apparatus. In addition, the resonant assembly is disposed on the apparatus fastening holder, the resonant assembly includes a metal elastomer and a piezoelectric material layer, the piezoelectric material layer is disposed on at least one surface of the metal elastomer, and the metal elastomer includes a drive foot. The driven member is located on a side of the resonant assembly that faces the frame, the forward preloading assembly is configured to press the drive foot of the metal elastomer against the driven member under an elastic force, and the drive foot is configured to drive the driven member to move relative to the apparatus fastening holder. The piezoelectric drive apparatus provided in this application may be used, to directly convert a microscopic motion of the resonant assembly into a macroscopic motion of the driven member, and an intermediate transmission mechanism is omitted. In this way, the piezoelectric drive apparatus has a simple structure, a small size, and a light weight. In addition, because the piezoelectric drive apparatus is not provided with a magnetic mechanical part, when the piezoelectric drive apparatus is used in an antenna, interference to a signal of the antenna can be avoided. This helps improve signal radiation performance of the antenna.

The piezoelectric drive apparatus provided in this application may be specifically disposed in a plurality of manners. In a possible implementation, the metal elastomer includes a first surface and a second surface that are disposed opposite to each other, and the second surface is disposed facing the apparatus fastening holder. The resonant assembly includes two piezoelectric material layers, the two piezoelectric material layers are disposed on the first surface of the metal elastomer, and the two piezoelectric material layers are arranged adjacent to each other. In addition, the drive foot is disposed on the second surface of the metal elastomer, and the drive foot protrudes from the second surface in a direction from the first surface to the second surface. This helps the drive foot be in contact with the driven member. In this case, when there is a specific phase difference between high-frequency voltages applied to the two piezoelectric material layers on the first surface of the metal elastomer, the metal elastomer may generate a specific regular pattern of microscopic elliptical motion, to drive the drive foot to move synchronously, thereby causing the drive foot to drive the driven member to move relative to the apparatus fastening holder.

In a possible implementation of this application, the piezoelectric drive apparatus further includes a resonant assembly bracket and a resonant assembly fastening holder, and the resonant assembly fastening holder is located between the apparatus fastening holder and the resonant assembly bracket. The resonant assembly fastening holder is connected to the apparatus fastening holder, and the resonant assembly fastening holder includes a mounting groove. The metal elastomer is connected to the resonant assembly bracket, and the resonant assembly bracket is mounted in the mounting groove. Such arrangement can help improve structural reliability of the resonant assembly.

In this application, to avoid interference to a motion of the resonant assembly, the resonant assembly bracket is not rigidly connected to the resonant assembly fastening holder, but the resonant assembly bracket is joined, by a lap-joint, to a side of the resonant assembly fastening holder that faces away from the apparatus fastening holder. In addition, the piezoelectric drive apparatus further includes a lateral preloading assembly. The lateral preloading assembly is located between an end portion of the resonant assembly bracket and a groove wall of the mounting groove in an arrangement direction of the two piezoelectric material layers. The lateral preloading assembly includes a lateral preloading elastic member and a first rolling member, one end of the lateral preloading elastic member abuts against the groove wall of the mounting groove, and the other end of the lateral preloading elastic member presses the first rolling member against the end portion of the resonant assembly bracket, so that the first rolling member is pressed against the end portion of the resonant assembly bracket under an elastic force of the lateral preloading elastic member. In this way, in a process in which the resonant assembly bracket moves with the metal elastomer, the lateral preloading assembly can limit a motion of the resonant assembly bracket in the arrangement direction of the two piezoelectric material layers, so that the resonant assembly bracket is prevented from moving in the direction. In addition, because the end portion of the resonant assembly bracket abuts against the first rolling member, arrangement of the lateral preloading assembly does not affect a motion of the resonant assembly bracket with the metal elastomer. Therefore, the lateral preloading assembly is disposed between the resonant assembly bracket and the groove wall of the mounting groove, so that movement stability of the resonant assembly bracket can be effectively improved, and therefore, movement stability of the resonant assembly is improved. This helps improve stability of a driving force that is output by the resonant assembly through the drive foot.

In a possible implementation of this application, the driven member is located between the resonant assembly and the apparatus fastening holder, and a surface of the driven member that faces the resonant assembly abuts against the drive foot of the resonant assembly, so that the drive foot applies the driving force to the driven member.

To increase friction between the drive foot and the driven member, the piezoelectric drive apparatus further includes a friction member, the friction member is connected to the surface of the driven member that faces the resonant assembly, and the drive foot abuts against the friction member. By increasing the friction between the drive foot and the driven member, efficiency of transmitting the driving force from the drive foot to the driven member can be effectively improved. This helps reduce power consumption of the piezoelectric drive apparatus.

In a possible implementation of this application, the piezoelectric drive apparatus further includes a second rolling member, the second rolling member is located between the driven member and the apparatus fastening holder, and both the driven member and the apparatus fastening holder abut against a surface of the second rolling member. In this way, in a process in which the driven member moves relative to the apparatus fastening holder, a friction pair between the driven member and the apparatus fastening holder is a rolling friction pair, so that resistance to a relative motion between the driven member and the apparatus fastening holder can be small, thereby helping reduce the power consumption of the piezoelectric drive apparatus.

To improve motion reliability of the second rolling member, at least one of the apparatus fastening holder and the driven member is provided with a limiting groove, and at least a part of the second rolling member is accommodated in the limiting groove, to limit the second rolling member in the limiting groove.

In a possible implementation of this application, to enable the forward preloading assembly to apply an elastic acting force to the resonant assembly, the piezoelectric drive apparatus further includes a cover plate, and the cover plate is connected to the resonant assembly fastening holder. The forward preloading assembly is located between the resonant assembly and the cover plate, and the forward preloading assembly abuts against the cover plate and the resonant assembly, so that the forward preloading assembly is pressed against the resonant assembly by using a connection force between the cover plate and the resonant assembly fastening holder.

During specific arrangement of the forward preloading assembly, the forward preloading assembly may include a forward preloading elastic member and a pressing plate, the forward preloading elastic member is located between the pressing plate and the cover plate, the forward preloading elastic member abuts against the cover plate and the pressing plate, and the pressing plate abuts against the resonant assembly. In this way, uniformity and stability of an elastic force applied by the forward preloading elastic member to the resonant assembly can be improved.

In a possible implementation of this application, the piezoelectric drive apparatus further includes a buffer pad, and the buffer pad is located between the forward preloading assembly and the resonant assembly. In this way, the forward preloading assembly can be effectively prevented from causing extrusion and damage to the piezoelectric material layer, to improve structural reliability of the piezoelectric drive apparatus.

The resonant assembly of the piezoelectric drive apparatus provided in this application may be alternatively disposed in another possible manner. For example, in a possible implementation, the metal elastomer is connected to the apparatus fastening holder. In this case, the resonant assembly includes four piezoelectric material layers, two of the four piezoelectric material layers are located on a first surface of the metal elastomer, the other two of the four piezoelectric material layers are located on a second surface of the metal elastomer, and the first surface and the second surface are two surfaces of the metal elastomer that are disposed opposite to each other. In addition, the metal elastomer includes a hollow area and two drive feet, two piezoelectric material layers located on a same surface of the metal elastomer are respectively located on two sides of the hollow area, and the two piezoelectric material layers located on the first surface are disposed in a one-to-one correspondence with the two piezoelectric material layers located on the second surface. The two drive feet are located on two sides of the hollow area, an arrangement direction of the two drive feet intersects with an arrangement direction of the two piezoelectric material layers located on the same surface of the metal elastomer, and the two drive feet protrude from corresponding side surfaces of the metal elastomer in a direction facing away from the hollow area. In the foregoing manner of designing the resonant assembly, a same voltage may be applied to two piezoelectric material layers disposed on a surface on a same side of the metal elastomer, and there is a specific phase difference between high-frequency voltages applied to piezoelectric material layers disposed on two surfaces of the metal elastomer, so that the metal elastomer can generate a specific regular pattern of microscopic elliptical motion, thereby driving the drive foot to move synchronously and further causing the drive foot to drive the driven member to move.

In a possible implementation of this application, the piezoelectric drive apparatus further includes a friction member, and the friction member is connected to a surface of the driven member that faces the resonant assembly. In addition, the friction member includes two friction plates that are disposed opposite to each other, the metal elastomer is located between the two friction plates, and the two drive feet abut against the two friction plates in a one-to-one correspondence. In this way, friction between the drive foot and the driven member can be effectively increased, thereby effectively improving efficiency of transmitting a driving force from the drive foot to the driven member. This helps reduce power consumption of the piezoelectric drive apparatus.

In a possible implementation of this application, the forward preloading assembly is connected to the surface of the driven member that faces the resonant assembly, and the forward preloading assembly abuts against a surface of each friction plate that faces away from the metal elastomer. In this way, each friction plate can be pressed against a corresponding drive foot under an elastic force of the forward preloading assembly, and the elastic force of the forward preloading assembly can be adjusted to adjust a squeezing force between the friction plate and the corresponding drive foot, thereby adjusting friction between the friction plate and the corresponding drive foot.

During specific arrangement of the forward preloading assembly, the forward preloading assembly may include a claw-shaped spring plate, at least one elastic claw portion of the claw-shaped spring plate abuts against a surface of one friction plate that faces away from the metal elastomer, and at least one elastic claw portion of the claw-shaped spring plate abuts against a surface of the other friction plate that faces away from the metal elastomer. In this way, a structure of the forward preloading assembly can also be simple while the forward preloading assembly presses the friction plate against the drive foot.

In another possible implementation of this application, a manner of disposing the resonant assembly is further provided. Specifically, the metal elastomer of the resonant assembly is connected to the apparatus fastening holder, the resonant assembly includes two piezoelectric material layers, and the two piezoelectric material layers are respectively disposed on two opposite surfaces of the metal elastomer. The resonant assembly further includes a drive shaft, the drive shaft passes through the two piezoelectric material layers and the metal elastomer, and the drive foot of the metal elastomer is connected to the drive shaft. In addition, the driven member and the resonant assembly are located on a same side of the apparatus fastening holder, the apparatus fastening holder includes a first mounting portion and a second mounting portion that are disposed opposite to each other, and two ends of the drive shaft are respectively mounted on the first mounting portion and the second mounting portion. To transmit the microscopic motion generated by the resonant assembly to the driven member, the piezoelectric drive apparatus further includes a friction member. The friction member is connected to the driven member, and the forward preloading assembly is configured to press the friction member against the drive shaft under an elastic force, so that effect of squeezing between the driven member and the drive shaft is achieved, to transmit, through the drive shaft, the microscopic motion generated by the resonant assembly to the driven member, thereby driving the driven member to move.

During specific arrangement of the friction member, the friction member includes two clamping portions, and one of the two clamping portions is connected to the driven member. In addition, the drive shaft is located between the two clamping portions, and the forward preloading assembly is configured to press the two clamping portions against the drive shaft under an elastic force, so that the driven member is in reliable contact with the drive shaft.

In a possible implementation of this application, the forward preloading assembly includes two spring plates, and each spring plate is configured to clamp corresponding end portions of the two clamping portions. In this way, a structure of the forward preloading assembly can also be simple while the forward preloading assembly presses the driven member against the drive shaft.

According to a second aspect, this application further provides an antenna. The antenna includes a phase shifter and the piezoelectric drive apparatus according to the first aspect. The phase shifter includes a frame, and a dielectric medium and a strip line that are accommodated in the frame, the apparatus fastening holder of the piezoelectric drive apparatus is connected to the frame, and the driven member is connected to the dielectric medium. In the antenna, during operation of the piezoelectric drive apparatus, a microscopic motion of the resonant assembly may be directly converted into a macroscopic motion of the driven member, so that the driven member drives the dielectric medium of the phase shifter to move relative to the strip line, to achieve an objective of changing a dielectric constant of the strip line. Because the piezoelectric drive apparatus provided in this application directly outputs a driving force in a piezoelectric driving manner, and an intermediate transmission mechanism is omitted. In this way, the piezoelectric drive apparatus has a simple structure, a small size, and a light weight. This facilitates a miniaturized and lightweight design of the antenna. In addition, because the piezoelectric drive apparatus is not provided with a magnetic mechanical part, when the piezoelectric drive apparatus is used in the antenna, interference to a signal of the antenna can be avoided. This helps improve signal radiation performance of the antenna.

According to a third aspect, this application further provides a base station. The base station includes a radio frequency processing unit, a baseband processing unit, and the antenna according to the second aspect, and the baseband processing unit is connected to the antenna through the radio frequency processing unit. Signal radiation performance of the base station provided in this application is good.

### BRIEF DESCRIPTION OF DRAWINGS

FIG. 1 is a diagram of a system architecture according to an embodiment of this application;
FIG. 2 is a diagram of an application scenario of an antenna according to an embodiment of this application;
FIG. 3 is a diagram of a structure of an antenna according to an embodiment of this application;
FIG. 4 is a diagram of an assembly structure of a piezoelectric drive apparatus and a phase shifter according to an embodiment of this application;
FIG. 5 is a schematic exploded view of a structure of the piezoelectric drive apparatus shown in FIG. 4;
FIG. 6 is a diagram of a structure of a resonant assembly of the piezoelectric drive apparatus shown in FIG. 5;
FIG. 7 is a diagram of a structure of the resonant assembly shown in FIG. 6 from another angle;
FIG. 8 is a diagram of another structure of a resonant assembly according to an embodiment of this application;
FIG. 9 is a diagram of a connection relationship between the piezoelectric drive apparatus shown in FIG. 5 and a phase shifter;
FIG. 10 is a diagram of another structure of a piezoelectric drive apparatus according to an embodiment of this application;
FIG. 11 is an exploded view of the piezoelectric drive apparatus shown in FIG. 10;
FIG. 12 is a diagram of a connection relationship between the piezoelectric drive apparatus shown in FIG. 10 and a phase shifter according to an embodiment of this application;
FIG. 13 is a diagram of another structure of a piezoelectric drive apparatus according to an embodiment of this application;
FIG. 14 is a diagram of a structure of a resonant assembly of the piezoelectric drive apparatus shown in FIG. 13;
FIG. 15 is an exploded view of the piezoelectric drive apparatus shown in FIG. 13; and
FIG. 16 is a diagram of a connection relationship between the piezoelectric drive apparatus shown in FIG. 13 and a phase shifter according to an embodiment of this application.

### Reference numerals:

1000: base station; 2000: terminal;
100: antenna; 10: radome; 20: antenna connector; 30: radiating element; 40: reflector plate; 50: adjustment unit; 5a: power mechanism;
5b: calibration network; 60: phase shifter; 601: frame; 602: dielectric medium; 603: strip line; 70: functional module;
5: piezoelectric drive apparatus; 501: apparatus fastening holder; 5011: guide groove; 5012: limiting groove; 5013: first mounting portion;
50131: first mounting hole; 5014: second mounting portion; 50141: second mounting hole; 502: resonant assembly; 5021: metal elastomer;
50211: first surface; 50212: second surface; 50213: drive foot; 50214: hollow area; 5022: piezoelectric material layer; 5023: circuit board;
5024: drive shaft; 503: resonant assembly bracket; 504: resonant assembly fastening holder; 5041: mounting groove; 50411: lapping portion;
50412: first groove wall; 50413: second groove wall; 505: lateral preloading assembly; 5051: lateral preloading elastic member; 5052: first rolling member;
506: driven member; 5061: sliding block; 5062: protrusion; 5063: fastening holder; 507: friction member; 5071: friction plate; 5072: clamping portion;
508: forward preloading assembly; 5081: preloading elastic member; 5082: pressing plate; 50821: accommodation groove; 509: buffer pad; 510: cover plate;
511: second rolling member; 200: pole; 300: radio frequency processing unit; 400: baseband unit; 500: connection wire; 600: adjustment bracket;
700: grounding apparatus.

### DESCRIPTION OF EMBODIMENTS

To make the objectives, technical solutions, and advantages of this application clearer, the following further describes this application in detail with reference to accompanying drawings. However, example implementations may be implemented in a plurality of forms, and should not be construed as being limited to implementations described herein. Identical reference numerals in the accompanying drawings indicate identical or similar structures. Therefore, repeated descriptions thereof are omitted. Expressions of positions and directions in embodiments of this application are described by using the accompanying drawings as examples. However, changes may also be made as required, and all the changes fall within the protection scope of this application. The accompanying drawings in embodiments of this application are merely used to illustrate relative position relationships and do not represent an actual scale.

It should be noted that details are set forth in the following descriptions for ease of understanding this application. However, this application can be implemented in a plurality of manners different from those described herein, and a person skilled in the art can make similar inferences without departing from the connotation of this application. Therefore, this application is not limited to the following disclosed specific embodiments.

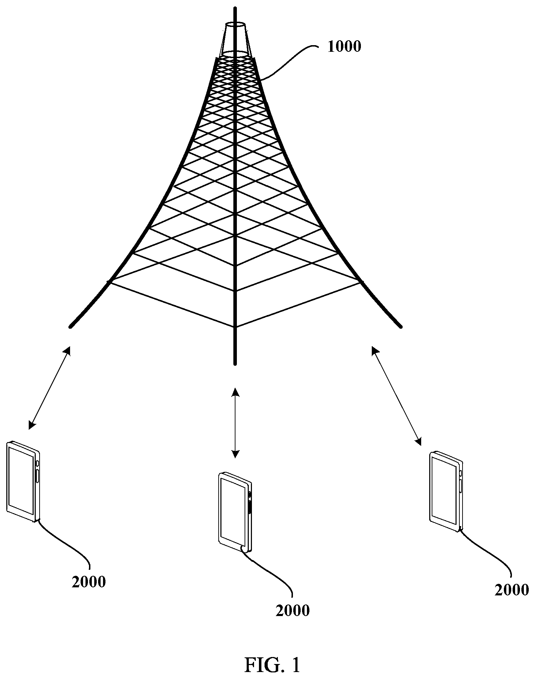

For ease of understanding of a piezoelectric drive apparatus, an antenna, and a base station provided in this application, the following first describes an application scenario of the piezoelectric drive apparatus, the antenna, and the base station. FIG. 1 is a diagram of a system architecture to which an embodiment of this application is applicable. As shown in FIG. 1, the system architecture may include a base station 1000 and a terminal 2000. Wireless communication may be implemented between the base station 1000 and the terminal 2000. The base station 1000 may also be referred to as an access network device, may be located in a base station subsystem (base station subsystem, BBS), a UMTS terrestrial radio access network (UMTS terrestrial radio access network, UTRAN), or an evolved UMTS terrestrial radio access network (evolved universal terrestrial radio access network, E-UTRAN), and is configured to perform cell coverage for signals to implement communication between a terminal device and a wireless network. Specifically, the base station 1000 may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolutional NodeB, eNB or eNodeB) in a long term evolution (long term evolution, LTE) system, or may be a radio controller in a cloud radio access network (cloud radio access network, CRAN) scenario. Alternatively, the base station 1000 may be a relay station, an access point, a vehicle-mounted device, a wearable device, a gNodeB (gNodeB or gNB) in a new radio (new radio, NR) system, an access network device in a future evolved network, or the like. This is not limited in embodiments of this application.

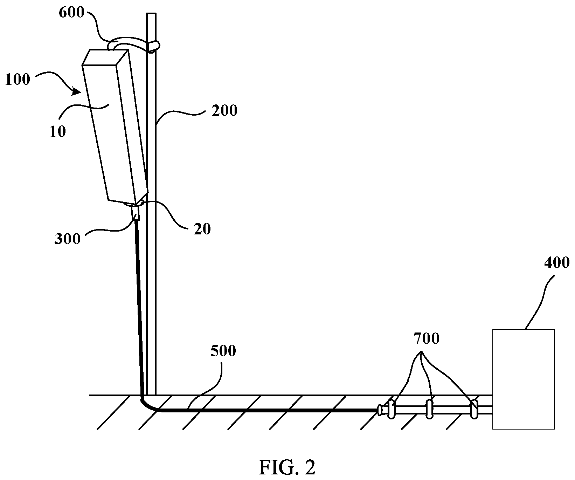

The base station 1000 is equipped with an antenna 100 to implement transmission of a signal in space. FIG. 2 is a diagram of an application scenario of the antenna 100 with which the base station 1000 shown in FIG. 1 is equipped. FIG. 2 shows structures such as a pole 200 and the antenna 100. The antenna 100 includes a radome 10. The antenna 100 is fastened on the pole 200 or a tower through the radome 10, so that the antenna 100 receives or transmits a signal. The radome 10 has a good electromagnetic wave penetration characteristic in terms of electrical performance, and can withstand impact of an external harsh environment in terms of mechanical performance, so that the radome 10 can protect an antenna system from impact of an external environment.

The base station 1000 may further include a radio frequency processing unit 300 and a baseband processing unit 400. The antenna 100 is connected to the radio frequency processing unit 300 through an antenna connector 20 located outside the radome 10, and the baseband processing unit 400 may be connected to the antenna 100 through the radio frequency processing unit 300. In some embodiments, the radio frequency processing unit 300 may also be referred to as a remote radio unit (remote radio unit, RRU), and the baseband processing unit 400 may also be referred to as a baseband unit (baseband unit, BBU).

The pole 200 is fastened to the ground at a specific height from the ground. The antenna 100 is fastened to the pole 200, so that a radiation distance requirement of the antenna 100 can be met. The antenna 100 is specifically detachably fastened to the pole 200 through an adjustment bracket 600, so that the antenna 100 receives or transmits a signal. In a direction perpendicular to a height of the pole 200, an orientation of the antenna 100 may be adjusted through the adjustment bracket 600.

In a possible embodiment, as shown in FIG. 2, the radio frequency processing unit 300 may be integrated with the antenna 100, and the baseband processing unit 400 is located at a remote end of the antenna 100. In this case, the radio frequency processing unit 300 and the antenna 100 may be collectively referred to as an active antenna unit (active antenna unit, AAU). It should be noted that FIG. 2 is merely an example of a position relationship between the radio frequency processing unit 300 and the antenna 100. In some other embodiments, the radio frequency processing unit 300 and the baseband processing unit 400 may alternatively be located at a remote end of the antenna 100. The radio frequency processing unit 300 may be connected to the baseband processing unit 400 through a connection wire 500.

A grounding apparatus 700 is disposed between the baseband processing unit 400 and the connection wire 500, and the grounding apparatus 700 usually includes a grounding electrode buried underground. A sealing member may be disposed at a joint between the antenna 100 and the connection wire 500, and a sealing member may also be disposed at a joint between the grounding apparatus 700 and the connection wire 500. The sealing member may specifically include at least one of an insulation sealing tape and a polyvinyl chloride (polyvinyl chloride, PVC) insulation tape. Certainly, the sealing member may alternatively be of another structure, and is not limited to a form of tape.

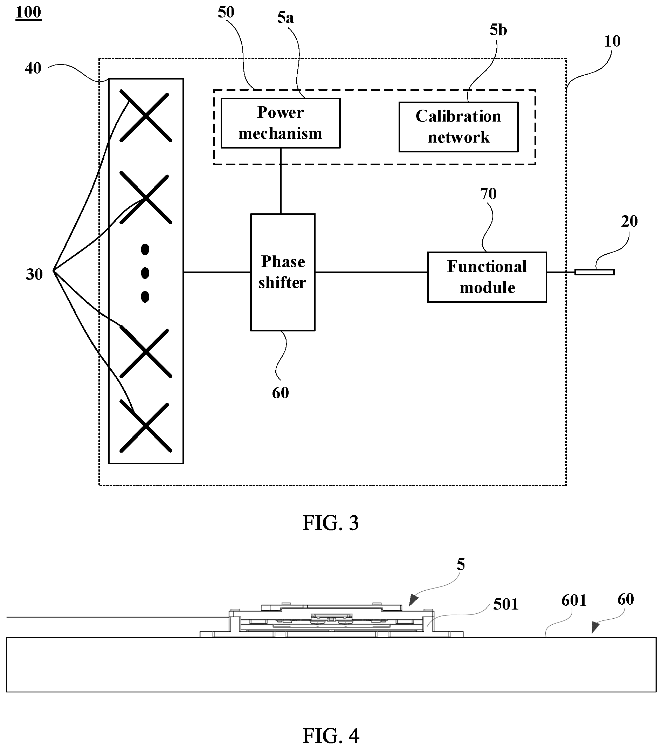

Further, FIG. 3 is a diagram of a structure of an antenna 100 according to an embodiment of this application. As shown in FIG. 3, the antenna 100 may include a radiating element 30 and a reflector plate 40. The radiating element 30 may also be referred to as an antenna element, an element, or the like. The radiating element 30 is a unit that forms a basic structure of an antenna array, and can effectively radiate or receive an antenna signal. Frequencies of different radiating elements 30 may be the same or different. The reflector plate 40 may also be referred to as a baseplate, an antenna panel, a metal reflective surface, or the like. The reflector plate 40 may reflect a received signal and concentrate the received signal on a reception point. The radiating element 30 is usually placed on one side of the reflector plate 40. This can greatly enhance a signal reception or transmission capability, and can also block and shield an interference signal from a rear surface of the reflector plate 40. In this application, the rear surface of the reflector plate 40 refers to a side of the reflector plate 40 that is opposite to the side of the reflector plate 40 that is used for arrangement of the radiating element 30.

In the antenna 100, a feed network is disposed between the radiating element 30 and the antenna connector 20. The feed network may provide specific power and a specific phase for the radiating element 30. As shown in FIG. 3, the feed network may include an adjustment unit 50 and a phase shifter 60. The adjustment unit 50 is configured to implement directions of different radiation beams, and the phase shifter 60 is configured to change a maximum radiation direction of a signal. A corresponding radiating element 30 is correspondingly adjusted through the phase shifter 60, so that an electrical downtilt of a radiation signal of each radiating element 30 may be changed, to change a radiation direction of the radiating element 30, thereby meeting a signal coverage requirement.

As shown in FIG. 3, a functional module 70 may be further disposed between the phase shifter 60 and the antenna connector 20. The functional module 70 may enhance performance of the antenna 100. For example, the functional module 70 may include one or a combination of at least two of a combiner, a power splitter, a filter, and a microwave circuit. The combiner or the power splitter may be used in a forward or reverse direction to split one signal into a plurality of signals or combine a plurality of signals into one signal. The filter may be configured to filter out interference signals. In some cases, the phase shifter 60 further incorporates a function of the power splitter or the combiner. In this case, the power splitter or the combiner may be omitted from the feed network. Different components included in the feed network may be connected to each other through a transmission line and a connector. It should be noted that the power splitter or the combiner may be located inside or outside a radome 10, and connection relationships between the different components mentioned above are not unique. FIG. 3 merely shows one possible position relationship and connection manner of the components.

Still refer to FIG. 3. The adjustment unit 50 may specifically include a power mechanism 5a and a calibration network 5b. The power mechanism 5a may drive the phase shifter 60 to change directions of different radiation beams of the antenna 100. The calibration network 5b sends a calibration signal to the power mechanism 5a to control the power mechanism 5a to operate.

A principle of driving, by the power mechanism 5a, the phase shifter 60 to change the directions of different radiation beams of the antenna 100 is as follows: The power mechanism 5a drives a dielectric medium of the phase shifter 60 to move relative to a strip line, to change relative positions of the dielectric medium and the strip line. Because the dielectric medium and the strip line of the phase shifter 60 each are a metal member having a specific dielectric constant, when the relative positions of the dielectric medium and the strip line changes, the dielectric constant of the strip line may be changed. The strip line may be electrically connected to the radiating element 30 of the antenna 100 to change the dielectric constant of the strip line, so that a phase of an antenna signal passing through the strip line can be adjusted, thereby implementing directional adjustment of a radiation direction of a signal of the antenna 100.

Currently, a power mechanism of a conventional phase shifter usually uses a combination of a rotary motor and a gear rack, to convert a rotational motion of the motor into a linear motion, thereby driving the dielectric medium of the phase shifter to move relative to the strip line along a straight line. However, the foregoing power mechanism is large in size and weight, has high costs, and cannot meet current development requirements for miniaturization and lightweight of antennas.

In view of this, in this application, a piezoelectric drive apparatus is used as a power mechanism of a phase shifter to drive a dielectric medium to move relative to a strip line, to convert a high-frequency microscopic motion of a resonant assembly of the piezoelectric drive apparatus into macroscopic displacement of the dielectric medium. Because a driving force directly output by the piezoelectric drive apparatus meets a movement requirement of the dielectric medium, an intermediate transmission mechanism is omitted, and therefore the piezoelectric drive apparatus occupies a small space. This helps meet a requirement for a miniaturized design of the antenna. In addition, because the piezoelectric drive apparatus is not provided with a magnetic mechanical part, when the piezoelectric drive apparatus is used in the antenna, interference to the signal of the antenna can be avoided, so that signal radiation performance of the antenna and a base station in which the piezoelectric drive apparatus is used can be improved. For ease of understanding the technical solutions of this application, the following specifically describes a phase shifter provided in this application with reference to the accompanying drawings and specific implementations.

FIG. 4 is a diagram of an assembly structure of a piezoelectric drive apparatus 5 and a phase shifter 60 according to an embodiment of this application. The phase shifter 60 includes a frame 601, and the piezoelectric drive apparatus 5 is mounted on the frame 601.

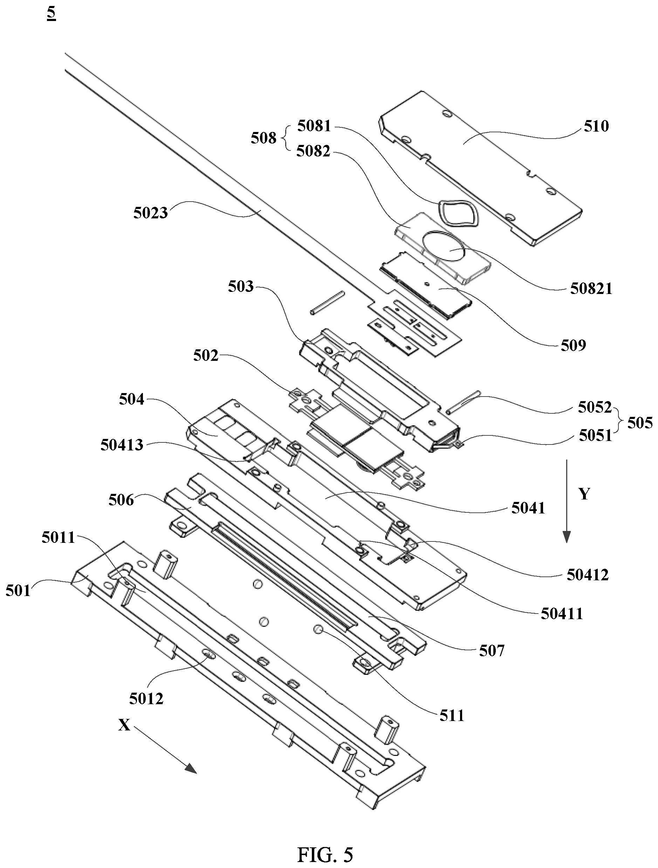

During specific arrangement of the piezoelectric drive apparatus 5, reference may be made to FIG. 5. FIG. 5 is a schematic exploded view of a structure of the piezoelectric drive apparatus 5 shown in FIG. 4. The piezoelectric drive apparatus 5 includes an apparatus fastening holder 501 and a resonant assembly 502. Refer to FIG. 4 and FIG. 5. The apparatus fastening holder 501 is configured to be fastened to the frame 601 of the phase shifter 60, and may be used as a support component of the entire piezoelectric drive apparatus 5 to support another structure in the piezoelectric drive apparatus 5.

Still refer to FIG. 5. The resonant assembly 502 is located on a side of the apparatus fastening holder 501. Specifically, the resonant assembly 502 is located on a side of the apparatus fastening holder 501 that faces away from the frame 601 of the phase shifter 60. In this application, for ease of description, an arrangement direction of the resonant assembly 502 and the apparatus fastening holder 501 may be defined as a Y direction.

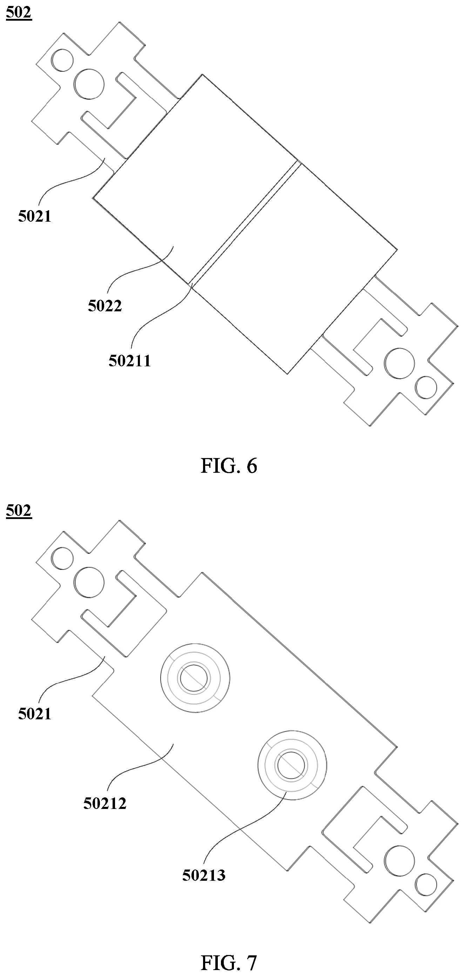

FIG. 6 is a diagram of a structure of the resonant assembly 502 of the piezoelectric drive apparatus 5 shown in FIG. 5. The resonant assembly 502 includes a metal elastomer 5021 and a piezoelectric material layer 5022. A material of the metal elastomer 5021 may be a metal material that is prone to deformation, for example, stainless steel or phosphor bronze. The piezoelectric material layer 5022 may include a plurality of piezoelectric ceramic layers that are stacked. The piezoelectric material layer 5022 is disposed on at least one surface of the metal elastomer 5021, and the piezoelectric material layer 5022 may be connected to the surface of the metal elastomer 5021 through bonding or the like.

In this embodiment of this application, a quantity of piezoelectric material layers 5022 in the resonant assembly 502 is not limited, and may be selected according to a specific requirement. For example, the resonant assembly 502 shown in FIG. 6 includes two piezoelectric material layers 5022, and the two piezoelectric material layers 5022 are disposed on a first surface 50211 of the metal elastomer 5021. The first surface 50211 of the metal elastomer 5021 faces away from the apparatus fastening holder 501. In addition, in the resonant assembly 502 shown in FIG. 6, the two piezoelectric material layers 5022 are arranged adjacent to each other. In this embodiment of this application, for ease of description, an arrangement direction of the two piezoelectric material layers 5022 in the resonant assembly 502 shown in FIG. 6 may be defined as an X direction.

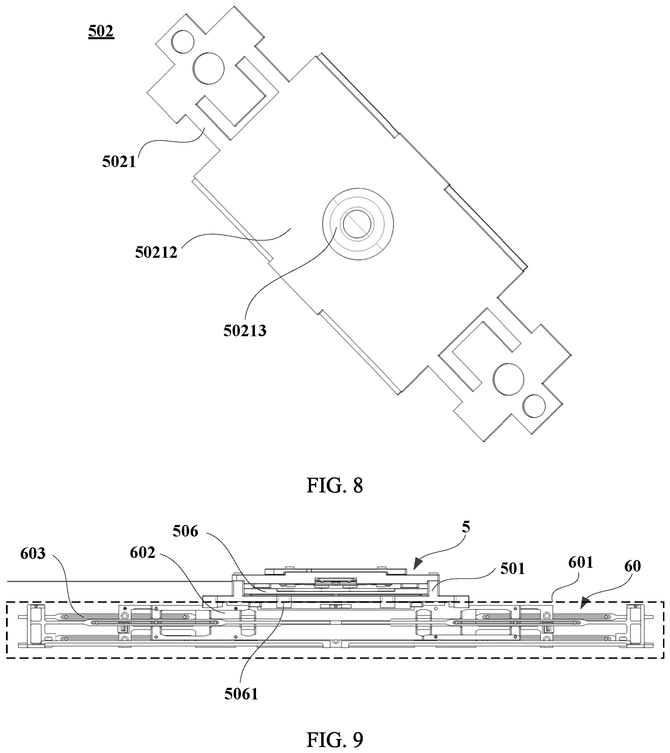

FIG. 7 is a diagram of a structure of the resonant assembly 502 shown in FIG. 6 from another angle. The metal elastomer 5021 further includes a drive foot 50213. The drive foot 50213 is disposed on a second surface 50212 of the metal elastomer 5021, and the drive foot 50213 protrudes from the second surface 50212 in a direction from the first surface 50211 to the second surface 50212. The second surface 50212 and the first surface 50211 of the metal elastomer 5021 are disposed opposite to each other. A quantity of drive feet 50213 of the metal elastomer 5021 is not limited in this application. For example, in the resonant assembly 502 shown in FIG. 7, there are two drive feet 50213 of the metal elastomer 5021. Alternatively, in a resonant assembly 502 shown in FIG. 8, there is one drive foot 50213 of the metal elastomer 5021; or in another possible embodiment, there may be three, four, or more drive feet 50213 of the metal elastomer 5021.

In this application, the metal elastomer 5021 may be of an integrated structure. In other words, the drive foot 50213 is a part of the metal elastomer 5021, the drive foot 50213 and the metal elastomer 5021 are made of the same materials, and the drive foot 50213 and the metal elastomer 5021 are formed in one manufacturing process, to simplify a structure of the metal elastomer 5021 and improve production efficiency. Alternatively, the drive foot 50213 may be of an independent structure, and may be fastened to the second surface 50212 of the metal elastomer 5021 through welding, bonding, or the like. In this case, the drive foot 50213 and the metal elastomer 5021 may be made of the same materials or different materials. This helps improve flexibility in arrangement of the drive foot 50213.

Still refer to FIG. 5. The resonant assembly 502 further includes a circuit board 5023. The circuit board 5023 may be disposed on the first surface 50211 of the metal elastomer 5021, may be disposed on the second surface 50212 of the metal elastomer 5021, or may be disposed on a side surface of the metal elastomer 5021. The circuit board 5023 may be provided with a power supply module (not shown in FIG. 6), and the power supply module is electrically connected to each piezoelectric material layer 5022, to supply power to each piezoelectric material layer 5022 through the power supply module. In this application, the circuit board 5023 may be a flexible circuit board (flexible printed circuit, FPC), to improve flexibility in arrangement of the circuit board 5023. In this way, when there is a specific phase difference between high-frequency voltages applied by the power supply module to the two piezoelectric material layers 5022 disposed on the first surface 50211 of the metal elastomer 5021, the metal elastomer 5021 may generate a specific regular pattern of microscopic motion, to drive the drive foot 50213 to move synchronously.

The piezoelectric drive apparatus 5 shown in FIG. 5 further includes a resonant assembly bracket 503 and a resonant assembly fastening holder 504. The metal elastomer 5021 of the resonant assembly 502 is connected to the resonant assembly bracket 503, and a connection manner may be but is not limited to thread connection, welding, riveting, or the like.

The resonant assembly fastening holder 504 is located between the apparatus fastening holder 501 and the resonant assembly bracket 503, and the resonant assembly fastening holder 504 is fastened to the apparatus fastening holder 501. The resonant assembly fastening holder 504 includes a mounting groove 5041. In an arrangement direction of the resonant assembly fastening holder 504 and the apparatus fastening holder 501, the mounting groove 5041 runs through the resonant assembly fastening holder 504. In addition, the mounting groove 5041 is provided with a lapping portion 50411. The lapping portion 50411 may be of a protrusion structure provided on a groove wall of the mounting groove 5041. In this case, the lapping portion 50411 extends toward the inside of the mounting groove 5041 along the groove wall of the mounting groove 5041.

The resonant assembly bracket 503 is mounted in the mounting groove 5041 of the resonant assembly fastening holder 504, and the resonant assembly bracket 503 is joined, by a lap-joint, to a side of the lapping portion 50411 that faces away from the apparatus fastening holder 501. It should be noted that, in this application, there is no connection relationship between the resonant assembly bracket 503 and the resonant assembly fastening holder 504. In this case, when performing microscopic elliptical motion, the metal elastomer 5021 of the resonant assembly 502 may drive the resonant assembly bracket 503 to move synchronously with the metal elastomer 5021. In addition, other than being joined to the lapping portion 50411 in the mounting groove 5041 by a lap-joint, the resonant assembly bracket 503 may alternatively be directly joined, by a lap-joint, to a side of the resonant assembly fastening holder 504 that faces away from the apparatus fastening holder 501, to simplify the structure of the piezoelectric drive apparatus 5.

Still refer to FIG. 5. In the X direction, the mounting groove 5041 includes a first groove wall 50412 and a second groove wall 50413 that are provided opposite to each other, and a lateral preloading assembly 505 is disposed between the resonant assembly bracket 503 and at least one of the first groove wall 50412 and the second groove wall 50413.

In this application, the lateral preloading assembly 505 includes a lateral preloading elastic member 5051 and a first rolling member 5052, and the lateral preloading elastic member 5051 may be but is not limited to an elastic mechanical part such as a spring plate, a wave spring, a compression spring, or a tension spring. For example, the lateral preloading assembly 505 is disposed between the resonant assembly bracket 503 and the first groove wall 50412. In this case, one end of the lateral preloading elastic member 5051 abuts against the first groove wall 50412, and the other end of the lateral preloading elastic member 5051 abuts against the first rolling member 5052, so that, under an elastic force of the lateral preloading elastic member 5051, the first rolling member 5052 is pressed against an end portion of the resonant assembly bracket 503 that faces the first groove wall 50412. In this way, in a process in which the resonant assembly bracket 503 moves with the metal elastomer 5021, the lateral preloading assembly 505 can limit a motion of the resonant assembly bracket 503 in an arrangement direction of the first groove wall 50412 and the second groove wall 50413, so that the resonant assembly bracket 503 is prevented from moving in the direction. In addition, because an end face of the resonant assembly bracket 503 that faces the first groove wall 50412 abuts against the first rolling member 5052, arrangement of the lateral preloading assembly 505 does not affect a motion of the resonant assembly bracket 503 with the metal elastomer 5021. Therefore, the lateral preloading assembly 505 is disposed between the resonant assembly bracket 503 and the first groove wall 50412, so that movement stability of the resonant assembly bracket 503 can be effectively improved, and therefore, movement stability of the resonant assembly 502 is improved. This helps improve stability of a driving force that is output by the resonant assembly 502 through the drive foot 50213.

It may be understood that, to enable the first rolling member 5052 to be in stable contact with the end portion of the resonant assembly bracket 503, a groove may be provided at the end portion of the resonant assembly bracket 503 that faces the first groove wall 50412. In this case, at least a part of the first rolling member 5052 may be accommodated in the groove, and a side wall of the first rolling member 5052 is attached to a groove wall of the groove, so that the first rolling member 5052 can roll relative to the groove.

In this embodiment of this application, the first rolling member 5052 may be, for example, a roller. In addition, a lateral preloading assembly 505 may be disposed between the resonant assembly bracket 503 and the second groove wall 50413, or no lateral preloading assembly 505 may be disposed between the resonant assembly bracket 503 and the second groove wall 50413. When the lateral preloading assembly 505 is disposed between the resonant assembly bracket 503 and the second groove wall 50413, the lateral preloading assembly 505 may be specifically disposed with reference to the foregoing embodiment. Details are not described herein again. Alternatively, only a first rolling member 5052 may be disposed between the resonant assembly bracket 503 and the second groove wall 50413, to simplify the structure of the piezoelectric drive apparatus 5 while improving the movement stability of the resonant assembly bracket 503.

The piezoelectric drive apparatus 5 provided in this application further includes a driven member 506. The driven member 506 is configured to connect to a dielectric medium of the phase shifter 60, to drive the dielectric medium to move relative to a strip line. In this application, the driving force that is output by the resonant assembly 502 through the drive foot 50213 may act on the driven member 506, to drive the driven member 506 to move along a predetermined trajectory such as a straight line or a curve. Still refer to FIG. 5. During specific implementation, in the Y direction, the driven member 506 is located between the apparatus fastening holder 501 and the resonant assembly 502, and a surface of the driven member 506 that faces the resonant assembly 502 abuts against the drive foot 50213 of the resonant assembly 502, so that the driven member 506 moves with the drive foot 50213 under friction between the driven member 506 and the drive foot 50213.

It should be noted that, in this application, a voltage applied by the power supply module to the piezoelectric material layer 5022 may be adjusted, to adjust motion rules of the metal elastomer 5021 and the drive foot 50213, and further adjust the movement trajectory of the driven member 506.

In addition, the circuit board 5023 of the resonant assembly 502 may be provided with a displacement detection component (not shown in FIG. 5). The displacement detection component is configured to: calibrate displacement of a motion that is theoretically output by the resonant assembly 502 with actual displacement of the driven member 506, and send a calibration result to the resonant assembly 502, to control the resonant assembly 502 to act based on the calibration result, so that driving accuracy of the piezoelectric drive apparatus 5 can be improved.

Because the friction between the driven member 506 and the drive foot 50213 is crucial to ensuring movement stability of the driven member 506, to increase the friction between the driven member 506 and the drive foot 50213, the piezoelectric drive apparatus 5 provided in this application further includes a friction member 507. In the piezoelectric drive apparatus 5 shown in FIG. 5, the friction member 507 is disposed on the surface of the driven member 506 that faces the resonant assembly 502. In this case, the drive foot 50213 of the resonant assembly 502 may abut against a friction plate 5071.

In this application, the friction member 507 may be a metal sheet, and the friction member 507 is fastened to the surface of the driven member 506 that faces the resonant assembly 502, and a connection manner may be but is not limited to welding, bonding, clamping, or the like. Alternatively, the friction member 507 and the driven member 506 are of an integrated structure. In this case, the friction member 507 may be a part, of the surface of the driven member 506 that faces the resonant assembly 502, that is obtained through a polishing process and that has a large friction coefficient.

In addition, to make the drive foot 50213 of the resonant assembly 502 abut against the driven member 506, the piezoelectric drive apparatus 5 provided in this embodiment of this application further includes a forward preloading assembly 508. The forward preloading assembly 508 is located on a side of the resonant assembly 502 that faces away from the apparatus fastening holder, and the forward preloading assembly 508 presses the resonant assembly 502 against the driven member 506 under an elastic force. During specific implementation, as shown in FIG. 5, the forward preloading assembly 508 may include a forward preloading elastic member 5081 and a pressing plate 5082, and the forward preloading elastic member 5081 may be located on a side of the pressing plate 5082 that faces away from the resonant assembly 502, so that the forward preloading elastic member 5081 presses the pressing plate 5082 against the resonant assembly 502 under an elastic force, thereby pressing the resonant assembly 502 against the driven member 506. In this application, the forward preloading elastic member 5081 may be but is not limited to an elastic mechanical part such as a spring plate, a wave spring, a compression spring, or a tension spring.

In the piezoelectric drive apparatus 5 shown in FIG. 5, an accommodation groove 50821 may be further disposed on a side of the pressing plate 5082 that faces the forward preloading elastic member 5081. In this case, a part of the forward preloading elastic member 5081 may be accommodated in the accommodation groove 50821 of the pressing plate 5082, to improve structural reliability of the forward preloading assembly 508.

It should be noted that, in the piezoelectric drive apparatus 5 shown in FIG. 5, because the piezoelectric material layer 5022 is located on a side of the metal elastomer 5021 that faces the forward preloading assembly 508, to prevent the forward preloading assembly 508 from damaging the piezoelectric material layer 5022, the piezoelectric drive apparatus 5 may further include a buffer pad 509. The buffer pad 509 is located between the forward preloading assembly 508 and the resonant assembly 502, and the forward preloading assembly 508 presses the buffer pad 509 against the resonant assembly 502 under an elastic force. A material of the buffer pad 509 is not limited in this application. For example, the buffer pad 509 may be a layer made of a flexible material such as foam.

Still refer to FIG. 5. The piezoelectric drive apparatus 5 further includes a cover plate 510. The forward preloading assembly 508 is located between the cover plate 510 and the resonant assembly 502, and the cover plate 510 is fastened to the resonant assembly fastening holder 504, and a connection manner may be but is not limited to thread connection, so that the cover plate 510 is detachably connected to the resonant assembly fastening holder 504, to facilitate maintenance or replacement of the resonant assembly 502. In some possible embodiments, the cover plate 510 may alternatively be fastened to the resonant assembly fastening holder 504 through welding, bonding, riveting, or the like, to improve reliability of connection between the cover plate 510 and the resonant assembly fastening holder 504.

In addition, it may be understood that, the forward preloading elastic member 5081 of the forward preloading assembly 508 is located between the cover plate 510 and the pressing plate 5082, the forward preloading elastic member 5081 may abut against the cover plate 510 and the pressing plate 5082, and the pressing plate 5082 abuts against the resonant assembly 502. In this way, the forward preloading assembly 508 can be pressed against the resonant assembly 502 through connection between the cover plate 510 and the resonant assembly fastening holder 504, so that the forward preloading assembly 508 applies a normal force to the resonant assembly 502, causing the forward preloading assembly 508 to press the drive foot of the resonant assembly 502 against the driven member 506.

It can be learned from the foregoing descriptions that the driven member 506 may move relative to the apparatus fastening holder 501 under driving of the resonant assembly 502. To improve movement stability of the driven member 506, as shown in FIG. 5, the apparatus fastening holder 501 includes a guide groove 5011. A specific shape of the guide groove 5011 may be adjusted based on a movement trajectory of the driven member 506 relative to the apparatus fastening holder 501. For example, the guide groove 5011 may be a straight-line sliding groove, and the guide groove 5011 extends in the X direction. In addition, the driven member 506 may further include a sliding block (not shown in FIG. 5). The sliding block may be located on a surface of the driven member 506 that faces away from the resonant assembly 502, and the sliding block may be inserted into the guide groove 5011. In this case, the sliding block of the driven member 506 may slide along the guide groove 5011 under driving of the resonant assembly 502.

To improve smoothness of a motion of the driven member 506 relative to the apparatus fastening holder 501, the piezoelectric drive apparatus 5 provided in this embodiment of this application further includes a second rolling member 511. The second rolling member 511 is located between the driven member 506 and the apparatus fastening holder 501, and both the driven member 506 and the apparatus fastening holder 501 abut against a surface of the second rolling member 511. In this way, in a process in which the driven member 506 moves relative to the apparatus fastening holder 501, a friction pair between the driven member 506 and the apparatus fastening holder 501 is a rolling friction pair, so that resistance to a relative motion between the driven member 506 and the apparatus fastening holder 501 can be small, thereby helping reduce power consumption of the piezoelectric drive apparatus 5.

A specific type of the second rolling member 511 is not limited in this application. For example, the second rolling member 511 may be a roller or a ball. It may be understood that, to improve motion reliability of the second rolling member 511, at least one of the apparatus fastening holder 501 and the driven member 506 may be further provided with a limiting groove 5012. For example, in FIG. 5, the apparatus fastening holder 501 is provided with the limiting groove 5012, and at least a part of the second rolling member 511 may be accommodated in the limiting groove 5012. In this embodiment of this application, alternatively, the apparatus fastening holder 501 and the driven member 506 each may be provided with a limiting groove 5012, and limiting grooves 5012 of the apparatus fastening holder 501 and the driven member 506 are provided opposite to each other. In this way, a part of the second rolling member 511 is located in the limiting groove 5012 of the apparatus fastening holder 501, and a part of the second rolling member 511 is located in the limiting groove 5012 of the driven member 506.

A quantity of second rolling members 511 is not limited in this application. For example, there may be two, three, or more second rolling members 511. This may be specifically configured based on available space between the apparatus fastening holder 501 and the driven member 506. In addition, a shape of the limiting groove 5012 is not limited in this application. For example, a cross-sectional shape of the limiting groove 5012 of the apparatus fastening holder 501 may be a V shape, a U shape, or the like, and a cross-sectional shape of the limiting groove 5012 of the driven member 506 may be a V shape, a U shape, or the like, to prevent the second rolling member 511 from disengaging from between the apparatus fastening holder 501 and the driven member 506.

In this application, to facilitate connection between the driven member 506 and the dielectric medium 602 of the phase shifter 60, the guide groove 5011 of the apparatus fastening holder 501 may be a through groove. In other words, the guide groove 5011 penetrates the apparatus fastening holder 501 in the Y direction. FIG. 9 is a diagram of a connection relationship between the piezoelectric drive apparatus 5 shown in FIG. 5 and the phase shifter 60. The dielectric medium 602 and the strip line 603 of the phase shifter 60 are accommodated in the frame 601, the apparatus fastening holder 501 of the piezoelectric drive apparatus 5 is connected to the frame 601, and the side of the driven member 506 of the piezoelectric drive apparatus 5 that faces away from the resonant assembly 502 is connected to the dielectric medium 602 of the phase shifter 60. Specifically, the sliding block 5061 of the driven member 506 that is inserted into the guide groove 5011 may be configured to connect to the dielectric medium 602 of the phase shifter 60. This helps improve convenience of connection between the piezoelectric drive apparatus 5 and the phase shifter 60, and facilitates a miniaturized design of the piezoelectric drive apparatus 5, thereby reducing space occupied by the piezoelectric drive apparatus 5 in an antenna.

According to the piezoelectric drive apparatus 5 provided in this application, the drive foot 50213 of the metal elastomer 5021 of the resonant assembly 502 is in frictional contact with the driven member 506, to convert a microscopic motion of the resonant assembly 502 into a macroscopic motion of the driven member 506, so that a driving force that meets a motion requirement is directly output in a piezoelectric driving manner, and an intermediate transmission mechanism is omitted. In this way, the piezoelectric drive apparatus 5 has a simple structure, a small size, and a light weight. In addition, because the piezoelectric drive apparatus 5 is not provided with a magnetic mechanical part, when the piezoelectric drive apparatus 5 is used in the antenna, interference to a signal of the antenna can be avoided. This helps improve signal radiation performance of the antenna.

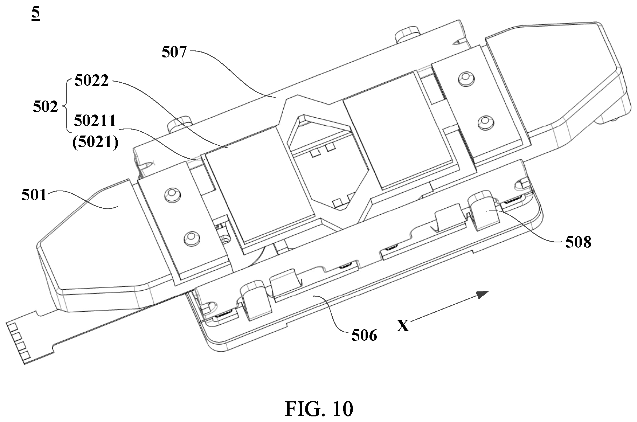

Based on the descriptions of a driving principle of the piezoelectric drive apparatus 5 provided in this application in the foregoing embodiment, a series of variations may be made to a specific structure of the piezoelectric drive apparatus 5. For example, FIG. 10 is a diagram of another structure of a piezoelectric drive apparatus 5 according to an embodiment of this application. The piezoelectric drive apparatus 5 shown in FIG. 10 also mainly includes an apparatus fastening holder 501, a resonant assembly 502, a driven member 506, a forward preloading assembly 508, and a friction member 507. The apparatus fastening holder 501 is still fastened to a frame 601 of a phase shifter 60, to be used as a support component of the entire piezoelectric drive apparatus 5 to support another structure in the piezoelectric drive apparatus 5.

A metal elastomer 5021 of the resonant assembly 502 is connected to a surface of the apparatus fastening holder 501, and a connection manner may be but is not limited to threaded connection, riveting, or the like. In addition, as shown in FIG. 10, the resonant assembly 502 and the driven member 506 may be respectively disposed on two sides of the apparatus fastening holder 501. In some possible embodiments, the resonant assembly 502 and the driven member 506 may alternatively be located on a same side of the apparatus fastening holder 501.

In the piezoelectric drive apparatus 5 shown in FIG. 10, the metal elastomer 5021 includes a first surface 50211 and a second surface (not shown in FIG. 10) that are provided opposite to each other. The first surface 50211 faces away from the apparatus fastening holder 501. The resonant assembly 502 includes four piezoelectric material layers 5022. Two of the four piezoelectric material layers 5022 are disposed on the first surface 50211 of the metal elastomer 5021, and the other two of the four piezoelectric material layers 5022 are disposed on the second surface of the metal elastomer 5021. FIG. 10 shows only the two piezoelectric material layers 5022 disposed on the first surface 50211 of the metal elastomer 5021. In this embodiment of this application, an arrangement direction of the two piezoelectric material layers 5022 disposed on the first surface 50211 of the metal elastomer 5021 is the same as an arrangement direction of the two piezoelectric material layers 5022 disposed on the second surface of the metal elastomer 5021, and both the two piezoelectric material layers 5022 disposed on the first surface 50211 of the metal elastomer 5021 and the two piezoelectric material layers 5022 disposed on the second surface of the metal elastomer 5021 are arranged in an X direction.

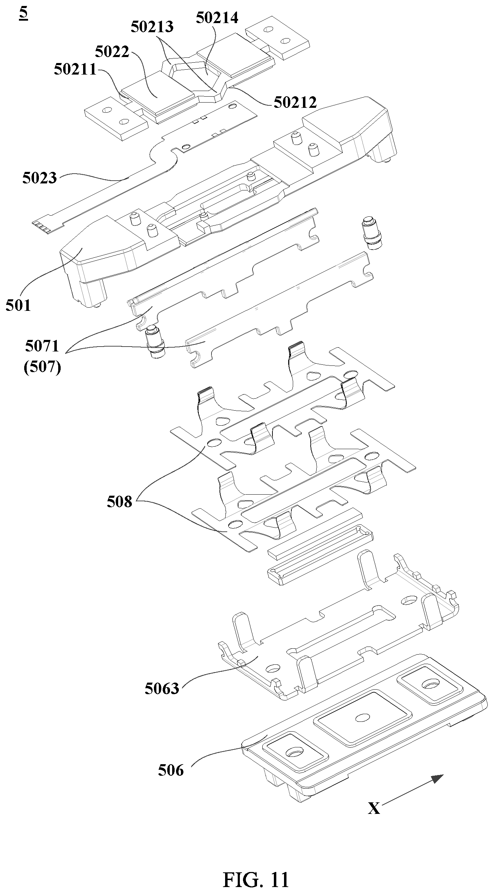

In addition, refer to FIG. 11. FIG. 11 is an exploded view of the piezoelectric drive apparatus 5 shown in FIG. 10. The metal elastomer 5021 includes a hollow area 50214, the two piezoelectric material layers 5022 disposed on the first surface 50211 of the metal elastomer 5021 are respectively located on two sides of the hollow area 50214, and the two piezoelectric material layers 5022 disposed on the second surface 50212 of the metal elastomer 5021 are respectively located on two sides of the hollow area 50214.

In a possible embodiment of this application, the two piezoelectric material layers 5022 disposed on the first surface 50211 of the metal elastomer 5021 and the two piezoelectric material layers 5022 disposed on the second surface 50212 of the metal elastomer 5021 may be disposed in a one-to-one correspondence, so that the two piezoelectric material layers 5022 disposed on the first surface 50211 of the metal elastomer 5021 and the two piezoelectric material layers 5022 disposed on the second surface 50212 of the metal elastomer 5021 are symmetrically disposed relative to the metal elastomer 5021. This facilitates a miniaturized design of the resonant assembly 502, thereby helping reduce a size of the piezoelectric drive apparatus 5.

Still refer to FIG. 5. There are two drive feet 50213 of the metal elastomer 5021. The two drive feet 50213 are located on two sides of the hollow area 50214. An arrangement direction of the two drive feet 50213 intersects an arrangement direction of two piezoelectric material layers 5022 disposed on a same surface of the metal elastomer 5021. For example, the arrangement direction of the two drive feet 50213 is perpendicular to the arrangement direction of the two piezoelectric material layers 5022 disposed on the same surface of the metal elastomer 5021. In addition, each drive foot 50213 protrudes from a corresponding side surface of the metal elastomer 5021 in a direction facing away from the hollow area 50214.

It should be noted that, in this application, the metal elastomer 5021 may be of an integrated metal sheet structure. This helps simplify a structure of the resonant assembly 502, thereby helping reduce the size of the piezoelectric drive apparatus 5. Alternatively, the drive foot 50213 may be of an independent structure, and may be fastened to a side surface of the metal elastomer 5021 through welding, bonding, or the like. In this case, the drive foot 50213 and the metal elastomer 5021 may be made of a same material or different materials. This helps improve flexibility in arrangement of the drive foot 50213.

As shown in FIG. 11, the friction member 507 is located on a side of the driven member 506 that faces the resonant assembly 502, and the friction member 507 is connected to a surface of the driven member 506 that faces the resonant assembly 502, and a connection manner may be but is not limited to welding, bonding, clamping, or the like. In addition, the friction member 507 includes two friction plates 5071 that are disposed opposite to each other. Refer to FIG. 10 and FIG. 11. The metal elastomer 5021 is located between the two friction plates 5071, and the two drive feet 50213 abut against the two friction plates 5071 in a one-to-one correspondence. In the piezoelectric drive apparatus 5 shown in FIG. 11 in this application, a fastening holder 5063 may be further included on the surface of the driven member 506 that faces the resonant assembly 502. The fastening holder 5063 protrudes from the surface of the driven member 506 in a direction from the driven member 506 to the resonant assembly 502. In this case, the two friction plates 5071 may be connected to the fastening holder 5063, so that the fastening holder 5063 can improve convenience and reliability of connection between the friction plate 5071 and the driven member 506.

It should be noted that the fastening holder 5063 and the driven member 506 may be of an integrated structure, to improve integration of the piezoelectric drive apparatus 5. Alternatively, the fastening holder 5063 is detachably connected to the driven member 506. This helps improve flexibility in arrangement of the fastening holder 5063.

Still refer to FIG. 10 and FIG. 11. A forward preloading assembly 508 is connected to the surface of the driven member 506 that faces the resonant assembly 502, and a connection manner may be but is not limited to welding, bonding, clamping, or the like. The forward preloading assembly 508 abuts against a surface of each friction plate 5071 that faces away from the metal elastomer 5021, and the forward preloading assembly 508 may apply a normal force to each friction plate 5071, so that the forward preloading assembly 508 presses each friction plate 5071 against a corresponding drive foot 50213 under an elastic force.

It should be noted that, in the piezoelectric drive apparatus 5 shown in FIG. 11 in this application, the forward preloading assembly 508 may include a claw-shaped spring plate. At least one elastic claw portion of the claw-shaped spring plate abuts against a surface of one friction plate 5071 that faces away from the metal elastomer 5021, and at least one elastic claw portion of the claw-shaped spring plate abuts against a surface of the other friction plate 5071 that faces away from the metal elastomer 5021, to apply a normal force to each friction plate 5071, thereby pressing each friction plate 5071 against the corresponding drive foot 50213. In addition, to increase friction between the friction plate 5071 and the drive foot 50213, a squeezing force applied by the forward preloading assembly 508 to the friction plate 5071 may be increased. During specific implementation, the forward preloading assembly 508 may include two or more claw-shaped spring plates, where at least one elastic claw portion of each claw-shaped spring plate abuts against a surface of one friction plate 5071 that faces away from the metal elastomer 5021, and at least one elastic claw portion of each claw-shaped spring plate abuts against a surface of the other friction plate 5071 that faces away from the metal elastomer 5021. In addition, the two or more claw-shaped spring plates of the forward preloading assembly 508 are detachably connected, to improve flexibility in arrangement of the forward preloading assembly 508.

Other structures in the piezoelectric drive apparatus 5 shown in FIG. 10 and FIG. 11 may be disposed with reference to any one of the foregoing embodiments. Details are not described herein again.

In the piezoelectric drive apparatus 5 shown in FIG. 10 and FIG. 11, a power supply module applies a same voltage to two piezoelectric material layers 5022 disposed on a surface on a same side of the metal elastomer 5021. When there is a specific phase difference between high-frequency voltages applied by the power supply module to piezoelectric material layers 5022 disposed on two surfaces of the metal elastomer 5021, the metal elastomer 5021 may generate a specific regular pattern of microscopic elliptical motion, thereby driving the drive foot 50213 to move synchronously. In addition, because each drive foot 50213 abuts against a corresponding friction plate 5071, friction between the drive foot 50213 and the corresponding friction plate 5071 causes the drive foot 50213 to drive the friction plate 5071 to move along a predetermined trajectory such as a straight line or a curve, thereby converting a microscopic motion of the resonant assembly 502 into a macroscopic motion of the friction plate 5071. Moreover, because the friction plate 5071 is connected to the driven member 506, the driven member 506 can move synchronously with the friction plate 5071.

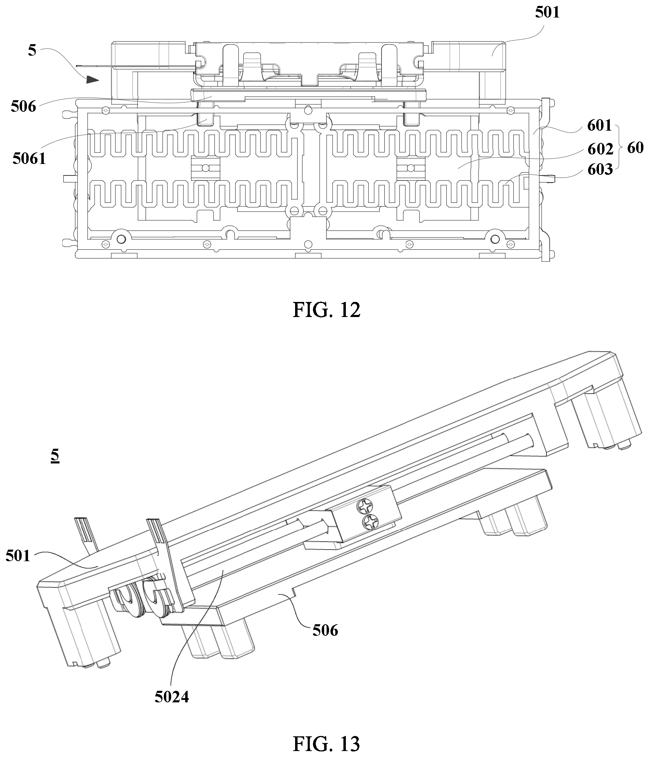

FIG. 12 is a diagram of a connection relationship between the piezoelectric drive apparatus 5 shown in FIG. 10 and the phase shifter 60 according to an embodiment of this application. The apparatus fastening holder 501 is fastened to the frame 601 of the phase shifter 60, and a side of the driven member 506 that faces away from the resonant assembly 502 is connected to a dielectric medium 602 of the phase shifter 60. In this case, in an operating process of the piezoelectric drive apparatus 5, the microscopic motion of the resonant assembly 502 may be directly converted into a macroscopic motion of the driven member 506, so that the driven member 506 drives the dielectric medium 602 of the phase shifter 60 to move relative to a strip line 603, to achieve an objective of changing a dielectric constant of the strip line 603. Because the piezoelectric drive apparatus 5 provided in this embodiment of this application directly outputs a driving force that meets a motion requirement in a piezoelectric driving manner, an intermediate transmission mechanism is omitted. In this way, the piezoelectric drive apparatus 5 has a simple structure, a small size, and a light weight. In addition, because the piezoelectric drive apparatus 5 is not provided with a magnetic mechanical part, when the piezoelectric drive apparatus 5 is used in an antenna, interference to a signal of the antenna can be avoided. This helps improve signal radiation performance of the antenna.

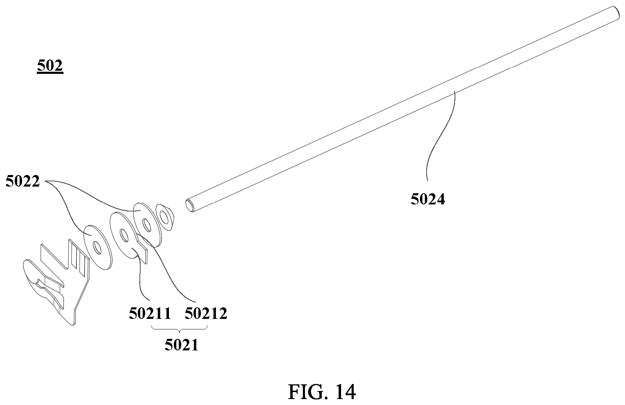

FIG. 13 is a diagram of another structure of a piezoelectric drive apparatus 5 according to an embodiment of this application. In the piezoelectric drive apparatus 5, in addition to a metal elastomer 5021 and a piezoelectric material layer 5022, a resonant assembly 502 further includes a drive shaft 5024. During specific arrangement of the resonant assembly 502, reference may be made to FIG. 14. FIG. 14 is a diagram of a structure of the resonant assembly 502 of the piezoelectric drive apparatus 5 shown in FIG. 13. The resonant assembly 502 includes two piezoelectric material layers 5022. One piezoelectric material layer 5022 is disposed on a first surface 50211 of the metal elastomer 5021, and the other piezoelectric material layer 5022 is disposed on a second surface 50212 of the metal elastomer 5021. The drive shaft 5024 passes through the two piezoelectric material layers 5022 and the metal elastomer 5021. A drive foot (not shown in FIG. 14) of the metal elastomer 5021 is connected to the drive shaft 5024, and a connection manner may be but is not limited to bonding. In this way, the drive shaft 5024 can move synchronously with the drive foot. In this case, the drive shaft 5024 may also be understood as the drive foot of the metal elastomer 5021.

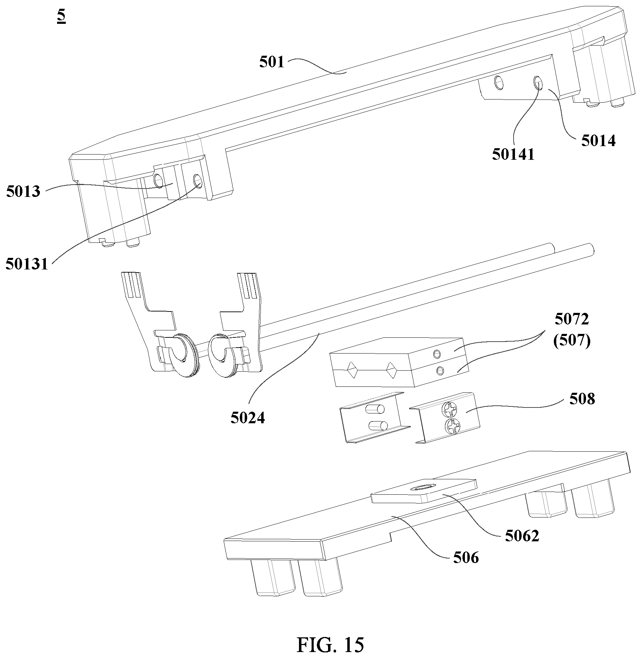

In addition, refer to FIG. 15. FIG. 15 is an exploded view of the piezoelectric drive apparatus 5 shown in FIG. 13. The resonant assembly 502 is located on a side of an apparatus fastening holder 501. The apparatus fastening holder 501 includes a first mounting portion 5013 and a second mounting portion 5014 that are disposed opposite to each other. The first mounting portion 5013 includes a first mounting hole 50131, the second mounting portion 5014 includes a second mounting hole 50141, and the drive shaft 5024 sequentially passes through the first mounting hole 50131 and the second mounting hole 50141, so that two ends of the drive shaft 5024 are respectively mounted on the first mounting portion 5013 and the second mounting portion 5014. In addition, in this application, the metal elastomer 5021 may be connected to the first mounting portion 5013, so that the metal elastomer 5021 is connected to the apparatus fastening holder 501.

It may be understood that the two piezoelectric material layers 5022 are electrically connected to a power supply module disposed on a circuit board 5023. In this case, when there is a specific phase difference between high-frequency voltages applied by the power supply module to the two piezoelectric material layers 5022 disposed on the metal elastomer 5021, the metal elastomer 5021 and the drive shaft 5024 are driven to generate high-frequency vibration.

Still refer to FIG. 15. In the piezoelectric drive apparatus 5, a friction member 507 includes two clamping portions 5072, and the two clamping portions 5072 are engaged with each other from two sides of the drive shaft 5024, so that the drive shaft 5024 is clamped between the two clamping portions 5072. In this way, the friction member 507 can move in a straight line along the drive shaft 5024 under driving of high-frequency vibration that is output by the resonant assembly 502.

In addition, a forward preloading assembly 508 may be configured to apply a normal force to the two clamping portions 5072 separately, to press the two clamping portions 5072 against the drive shaft 5024, that is, press the friction member 507 against the drive shaft 5024, so that the two clamping portions 5072 clamp the drive shaft 5024, thereby increasing friction between the clamping portions 5072 and the drive shaft 5024. In this embodiment of this application, the forward preloading assembly 508 may include two spring plates, and the two spring plates are respectively located at two end portions of the friction member 507 that are disposed opposite to each other. The two spring plates are connected to corresponding end portions of the two clamping portions 5072, and a connection manner may be but is not limited to threaded connection, so that each spring plate clamps corresponding end portions of the two clamping portions 5072.

It should be noted that a quantity of resonant assemblies 502 is not limited in this embodiment of this application. For example, there may be two resonant assemblies 502 as shown in FIG. 15, or there may be one, three, or more resonant assemblies 502. When there are two or more resonant assemblies 502, a drive shaft 5024 of each resonant assembly 502 is clamped between the two clamping portions 5072 of the friction member 507. This helps improve movement stability of the friction member 507, and can effectively increase a driving force applied to the friction member 507, thereby improving a movement speed of the friction member 507.

Refer to FIG. 13 and FIG. 15 together. The friction member 507 is located between the apparatus fastening holder 501 and the driven member 506, and a protrusion 5062 is provided on a surface of the driven member 506 that faces the friction member 507. In addition, the two clamping portions 5072 of the friction member 507 are arranged in a direction from the apparatus fastening holder 501 to the driven member 506. For ease of description, the two clamping portions 5072 may be respectively named a first clamping portion 5072 and a second clamping portion 5072, where the first clamping portion 5072 is closer to the driven member 506 than the second clamping portion 5072. In this case, a groove (not shown in FIG. 15) may be provided on a surface of the first clamping portion 5072 that faces the driven member 506. In this case, the protrusion 5062 of the driven member 506 may be inserted into the groove of the first clamping portion 5072, so that the first clamping portion 5072 is clamped to the driven member 506, to implement clamping between the driven member 506 and the friction member 507. In this way, the friction member 507 can drive the driven member 506 to move with the friction member 507.

In some possible embodiments of this application, a groove may alternatively be provided on a surface of the driven member 506 that faces the friction member 507, and a protrusion 5062 is provided on a surface of the first clamping portion 5072 that faces the driven member 506. This can also implement clamping between the driven member 506 and the first clamping portion 5072. Certainly, the driven member 506 may be connected to the friction member 507 in another possible manner, which is not described herein one by one, but should be understood as falling within the protection scope of this application. In addition, in another possible embodiment of this application, the first clamping portion 5072 and the driven member 506 may alternatively be of an integrated structure. This helps improve motion consistency between the driven member 506 and the friction member 507, thereby improving driving accuracy of the resonant assembly 502 for displacement of the driven member 506, and helping improve phase adjustment accuracy of a phase shifter 60 in which the piezoelectric drive apparatus 5 is used.

Other structures in the piezoelectric drive apparatus 5 shown in FIG. 13 may be disposed with reference to any one of the foregoing embodiments. Details are not described herein again.

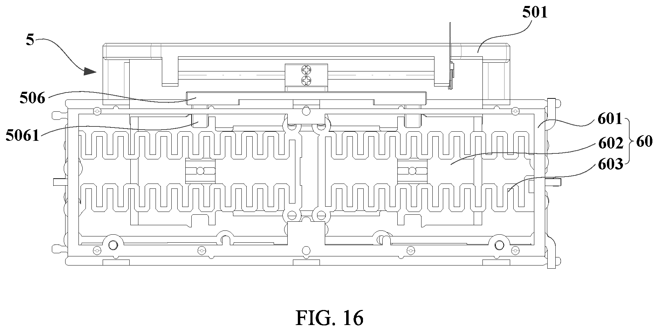

FIG. 16 is a diagram of a connection relationship between the piezoelectric drive apparatus 5 shown in FIG. 13 and the phase shifter 60 according to an embodiment of this application. The apparatus fastening holder 501 is fastened to a frame 601 of the phase shifter 60, and a side of the driven member 506 that faces away from the resonant assembly 502 is connected to a dielectric medium 602 of the phase shifter 60. In this case, in an operating process of the piezoelectric drive apparatus 5, a microscopic motion of the resonant assembly 502 may be directly converted into a macroscopic motion of the driven member 506, so that the driven member 506 drives the dielectric medium 602 of the phase shifter 60 to move relative to a strip line 603, to achieve an objective of changing a dielectric constant of the strip line 603. Because the piezoelectric drive apparatus 5 provided in this embodiment of this application directly outputs a driving force that meets a motion requirement in a piezoelectric driving manner, an intermediate transmission mechanism is omitted. In this way, the piezoelectric drive apparatus 5 has a simple structure, a small size, and a light weight. In addition, because the piezoelectric drive apparatus 5 is not provided with a magnetic mechanical part, when the piezoelectric drive apparatus 5 is used in an antenna, interference to a signal of the antenna can be avoided. This helps improve signal radiation performance of the antenna.

It may be understood that the foregoing embodiments of this application are merely examples for describing specific manners of disposing the piezoelectric drive apparatus 5 provided in this application. Adaptive variations made to the structure of the piezoelectric drive apparatus 5 according to the foregoing design principle of the piezoelectric drive apparatus 5 provided in this application should be understood as falling within the protection scope of this application. Details are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A piezoelectric drive apparatus, for use in a phase shifter, wherein the phase shifter comprises a frame, the piezoelectric drive apparatus comprises an apparatus fastening holder, a resonant assembly, a forward preloading assembly, and a driven member, and the apparatus fastening holder is configured to connect to the frame;
the resonant assembly is disposed on the apparatus fastening holder, the resonant assembly comprises a metal elastomer and a piezoelectric material layer, the piezoelectric material layer is disposed on at least one surface of the metal elastomer, and the metal elastomer comprises a drive foot; and
the driven member is located on a side of the resonant assembly that faces the frame, the forward preloading assembly is configured to press the drive foot of the metal elastomer against the driven member under an elastic force, and the drive foot is configured to drive the driven member to move relative to the apparatus fastening holder.

2. The piezoelectric drive apparatus according to claim 1, wherein the metal elastomer comprises a first surface and a second surface that are disposed opposite to each other, the second surface faces the apparatus fastening holder, the resonant assembly comprises two piezoelectric material layers, the two piezoelectric material layers are disposed on the first surface of the metal elastomer, the two piezoelectric material layers are arranged adjacent to each other, the drive foot is disposed on the second surface of the metal elastomer, and the drive foot protrudes from the second surface in a direction from the first surface to the second surface.

3. The piezoelectric drive apparatus according to claim 2, wherein the piezoelectric drive apparatus further comprises a resonant assembly bracket and a resonant assembly fastening holder, the resonant assembly fastening holder is located between the apparatus fastening holder and the resonant assembly bracket, the resonant assembly fastening holder is connected to the apparatus fastening holder, the resonant assembly fastening holder comprises a mounting groove, the metal elastomer is connected to the resonant assembly bracket, and the resonant assembly bracket is mounted in the mounting groove.

4. The piezoelectric drive apparatus according to claim 3, wherein the resonant assembly bracket is joined, by a lap-joint, to a side of the resonant assembly fastening holder that faces away from the apparatus fastening holder; and
the piezoelectric drive apparatus further comprises a lateral preloading assembly, wherein the lateral preloading assembly is located between an end portion of the resonant assembly bracket and a groove wall of the mounting groove in an arrangement direction of the two piezoelectric material layers, the lateral preloading assembly comprises a lateral preloading elastic member and a first rolling member, one end of the lateral preloading elastic member abuts against the groove wall of the mounting groove, and the other end of the lateral preloading elastic member presses the first rolling member against the end portion of the resonant assembly bracket.

5. The piezoelectric drive apparatus according to claim 3 or 4, wherein the driven member is located between the resonant assembly and the apparatus fastening holder, and a surface of the driven member that faces the resonant assembly abuts against the drive foot of the resonant assembly.

6. The piezoelectric drive apparatus according to claim 5, wherein the piezoelectric drive apparatus further comprises a friction member, the friction member is connected to the surface of the driven member that faces the resonant assembly, and the drive foot abuts against the friction member.

7. The piezoelectric drive apparatus according to claim 5 or 6, wherein the piezoelectric drive apparatus further comprises a second rolling member, the second rolling member is located between the driven member and the apparatus fastening holder, and both the driven member and the apparatus fastening holder abut against a surface of the second rolling member.

8. The piezoelectric drive apparatus according to claim 7, wherein at least one of the apparatus fastening holder and the driven member is provided with a limiting groove, and at least a part of the second rolling member is accommodated in the limiting groove.

9. The piezoelectric drive apparatus according to any one of claims 5 to 8, wherein the piezoelectric drive apparatus further comprises a cover plate, the cover plate is connected to the resonant assembly fastening holder, the forward preloading assembly is located between the resonant assembly and the cover plate, and the forward preloading assembly abuts against the cover plate and the resonant assembly.

10. The piezoelectric drive apparatus according to claim 9, wherein the forward preloading assembly comprises a forward preloading elastic member and a pressing plate, the forward preloading elastic member is located between the pressing plate and the cover plate, the forward preloading elastic member abuts against the cover plate and the pressing plate, and the pressing plate abuts against the resonant assembly.

11. The piezoelectric drive apparatus according to claim 9 or 10, wherein the piezoelectric drive apparatus further comprises a buffer pad, and the buffer pad is located between the forward preloading assembly and the resonant assembly.

12. The piezoelectric drive apparatus according to claim 1, wherein the metal elastomer is connected to the apparatus fastening holder; the resonant assembly comprises four piezoelectric material layers, two of the four piezoelectric material layers are located on a first surface of the metal elastomer, the other two of the four piezoelectric material layers are located on a second surface of the metal elastomer, and the first surface and the second surface are disposed opposite to each other; and
the metal elastomer comprises a hollow area and two drive feet, two piezoelectric material layers located on a same surface of the metal elastomer are respectively located on two sides of the hollow area, the two piezoelectric material layers located on the first surface are disposed in a one-to-one correspondence with the two piezoelectric material layers located on the second surface, the two drive feet are located on two sides of the hollow area, an arrangement direction of the two drive feet intersects with an arrangement direction of the two piezoelectric material layers located on the same surface of the metal elastomer, and the two drive feet protrude from corresponding side surfaces of the metal elastomer in a direction facing away from the hollow area.

13. The piezoelectric drive apparatus according to claim 12, wherein the piezoelectric drive apparatus further comprises a friction member, the friction member is connected to a surface of the driven member that faces the resonant assembly, the friction member comprises two friction plates that are disposed opposite to each other, the metal elastomer is located between the two friction plates, and the two drive feet abut against the two friction plates in a one-to-one correspondence.

14. The piezoelectric drive apparatus according to claim 13, wherein the forward preloading assembly is connected to the surface of the driven member that faces the resonant assembly, the forward preloading assembly abuts against a surface of each friction plate that faces away from the metal elastomer, and the forward preloading assembly presses each friction plate against a corresponding drive foot under an elastic force.

15. The piezoelectric drive apparatus according to claim 14, wherein the forward preloading assembly comprises a claw-shaped spring plate, at least one elastic claw portion of the claw-shaped spring plate abuts against a surface of one friction plate that faces away from the metal elastomer, and at least one elastic claw portion of the claw-shaped spring plate abuts against a surface of the other friction plate that faces away from the metal elastomer.

16. The piezoelectric drive apparatus according to claim 1, wherein the resonant assembly further comprises a drive shaft, the metal elastomer is connected to the apparatus fastening holder, the resonant assembly comprises two piezoelectric material layers, the two piezoelectric material layers are respectively disposed on two opposite surfaces of the metal elastomer, the drive shaft passes through the two piezoelectric material layers and the metal elastomer, and the drive foot of the metal elastomer is connected to the drive shaft;
the driven member and the resonant assembly are located on a same side of the apparatus fastening holder, the apparatus fastening holder comprises a first mounting portion and a second mounting portion that are disposed opposite to each other, and two ends of the drive shaft are respectively mounted on the first mounting portion and the second mounting portion; and
the piezoelectric drive apparatus further comprises a friction member, the friction member is connected to the driven member, and the forward preloading assembly is configured to press the friction member against the drive shaft under an elastic force.

17. The piezoelectric drive apparatus according to claim 16, wherein the friction member comprises two clamping portions, one of the two clamping portions is connected to the driven member, the drive shaft is located between the two clamping portions, and the forward preloading assembly is configured to press the two clamping portions against the drive shaft under an elastic force.

18. The piezoelectric drive apparatus according to claim 17, wherein the forward preloading assembly comprises two spring plates, the two spring plates are respectively located at two end portions of the friction plate that are disposed opposite to each other, and each spring plate is configured to clamp corresponding end portions of the two clamping portions.

19. An antenna, comprising a phase shifter and the piezoelectric drive apparatus according to any one of claims 1 to 18, wherein the phase shifter comprises a frame, and a dielectric medium and a strip line that are accommodated in the frame, the apparatus fastening holder of the piezoelectric drive apparatus is connected to the frame, and the driven member is connected to the dielectric medium.

20. A base station, comprising a radio frequency processing unit, a baseband processing unit, and the antenna according to claim 19, wherein the baseband processing unit is connected to the antenna through the radio frequency processing unit.
